Europäisches Patentamt

(19) European Patent Office

Office européen des brevets

(11) **EP 0 786 920 B1**

(12) **FASCICULE DE BREVET EUROPEEN**

(45) Date de publication et mention
de la délivrance du brevet:
**13.10.2004 Bulletin 2004/42**

(51) Int Cl.⁷: **H04R 27/00**, H04R 3/02,
G10L 21/02

(21) Numéro de dépôt: **97200101.0**

(22) Date de dépôt: **16.01.1997**

(54) **Système de transmission de signaux correlés**

Übertragungssystem für korrelierte Signale

Transmission system of correlated signals

(84) Etats contractants désignés:
**DE FR GB**

(30) Priorité: **23.01.1996 FR 9600752**

(43) Date de publication de la demande:
**30.07.1997 Bulletin 1997/31**

(73) Titulaire: **Koninklijke Philips Electronics N.V.
5621 BA Eindhoven (NL)**

(72) Inventeurs:
• **Deville, Yannick, Société Civile S.P.I.D.
75008 Paris (FR)**

• **Boissy, Jean-Christophe, Société Civile S.P.I.D.
75008 Paris (FR)**

(74) Mandataire: **Landousy, Christian
Société Civile SPID,
156, Boulevard Haussmann
75008 Paris (FR)**

(56) Documents cités:
**WO-A-93/05503          WO-A-95/02239
GB-A- 2 219 140          US-A- 4 774 682
US-A- 5 323 459**

**Description**

L'invention concerne un système de transmission de signaux muni de moyens de traitement pour isoler une estimation pour au moins un signal utile contenu dans au moins un signal de mélange, au moins un capteur pour détecter le signal de mélange, le signal de mélange comportant au moins le signal utile et au moins deux signaux perturbateurs corrélés lesquels sont délivrés par deux sources du système à partir respectivement de deux signaux électriques corrélés, les moyens de traitement étant destinés à recevoir, en entrée, le signal de mélange détecté ainsi que les deux signaux électriques corrélés à partir desquels les moyens de traitement extraient l'estimation du signal utile contenu dans le signal de mélange détecté en décorrélant, sur des décalages multiples, l'estimation vis-à-vis respectivement des signaux électriques corrélés.

Il peut s'agir d'un système de diffusion de signaux audio disposé par exemple dans une automobile ou dans un salon. Le système comporte une source sonore formée par exemple d'un autoradio, d'un lecteur de disque compact, d'un téléviseur, d'une chaîne Hi-Fi ou par d'autres sources sonores stéréophoniques. Le système peut comporter une reconnaissance vocale permettant à un utilisateur de fournir des commandes vocales pour commander notamment la source sonore.

Il peut s'agir d'un système de téléconférence qui comporte une station émettrice communiquant avec une station réceptrice pour lesquelles les conversations captées dans la station émettrice doivent être restituées sans dégradations dans la station réceptrice.

Il peut s'agir également de systèmes pour lesquels des signaux radiodiffusés arrivent sous forme de mélanges par voie hertzienne sur des antennes, les signaux radiodiffusés étant perturbés localement par des sources de bruit.

A titre d'exemple, considérons le cas où le signal utile est un signal de paroles émanant d'une personne.

Une première situation apparaît dans le cas de la transmission de conversations par téléconférence. Un microphone placé dans une station émettrice capte les voix ainsi que les bruits ambiants, l'ensemble des sons ainsi captés étant transmis à la station réceptrice. Bien évidemment, les sons diffusés par des haut-parleurs situés dans la station émettrice, en provenance de la station réceptrice, vont être également captés puis diffusés vers la station réceptrice provoquant des échos indésirables. Une solution limitée à certains types de signaux est révélée dans le document intitulé:

"Stereophonic acoustic echo cancellation- An overview of the fundamental problem" par M.M. Sondhi, D.R. Morgan, J.L. Hall, IEEE Signal Processing Letters, Vol.2, N° 8, 1995, pages 148-151.

Néanmoins, lorsque les haut-parleurs diffusent des sons stéréophoniques, il n'est pas connu de technique satisfaisante permettant d'isoler correctement la voix de la personne s'exprimant dans le microphone.

Une autre situation se présente dans le cas où la voix à capter est celle d'un conducteur s'exprimant dans un microphone placé dans une automobile. Ces dernières années, on a développé des possibilités pour le conducteur d'effectuer un contrôle vocal d'appareillages se trouvant dans une automobile. Ceci a pour but de libérer le conducteur de gestes à accomplir pour effectuer certains réglages ou pour fournir certaines commandes au véhicule lui-même. Il est donc nécessaire, dans un premier temps de reconnaître le message vocal prononcé par le conducteur, puis dans un second temps de décoder ce message vocal pour en extraire des commandes destinées à agir sur les appareillages. En plaçant plusieurs microphones à l'intérieur de l'habitacle, on parvient à isoler la voix du conducteur puis à décoder les commandes qu'elle renferme pour agir en conséquence. Mais l'automobile est un milieu fortement bruité où les techniques connues sont prises en défaut, notamment lorsque l'habitable renferme des haut-parleurs qui diffusent des sons stéréophoniques. Chaque fois que des signaux mélangés renferment des signaux corrélés entre eux, il est très difficile de les séparer d'une part entre eux, et d'autre part des autres signaux composant le mélange.

Le brevet US 5,323,459 décrit un système de transmission de signaux muni de moyens de traitement pour isoler une estimation pour au moins un signal utile contenu dans au moins un signal de mélange, au moins un capteur pour détecter le signal de mélange, le signal de mélange comportant au moins le signal utile et au moins deux signaux perturbateurs corrélés lesquels sont délivrés par deux sources du système à partir respectivement de deux signaux électriques corrélés. Les moyens de traitement reçoivent en entrée le signal de mélange détecté ainsi que les deux signaux électriques corrélés. Lesdits moyens comprennent des moyens de sélection du signal reçu le premier parmi les signaux électriques corrélés, un filtre adaptatif pour filtrer le signal ainsi sélectionné, et des moyens d'adaptation destinés à adapter le filtre adaptatif en effectuant la décorrélation, sur des décalages multiples, du signal d'estimation vis-à-vis dudit signal électrique corrélé.

Un but principal de l'invention est de proposer un système de transmission de signaux qui soit apte à séparer des signaux contenus dans des mélanges de signaux comportant des signaux corrélés et qui soit plus robuste aux perturbations que les techniques antérieures.

Un but particulier de l'invention est de contrôler le volume sonore restitué à l'utilisateur du système à partir de messages vocaux prononcés par l'utilisateur.

Ce but principal est atteint avec le système selon les revendications 1 ou 2.

Le message vocal est ainsi correctement séparé de tous les autres signaux sonores présents dans l'ambiance sonore, ces autres signaux pouvant provenir de n'importe quelle source sonore présente dans le véhicule. L'invention fournit une solution efficace au traitement de signaux stéréophoniques, c'est-à-dire des signaux corrélés, ce qui est impossible par les traitements connus.

Les signaux électriques corrélés, donnant naissance aux signaux perturbateurs corrélés, peuvent être prélevés sur les haut-parleurs d'un autoradio, d'un téléviseur, d'une chaîne Hi-Fi ou d'autres sources sonores.

Dans ces cas, le capteur étant un microphone, le signal de mélange étant un signal sonore d'ambiance capté dans un lieu d'écoute par le microphone, le signal utile étant un message vocal émis par un locuteur dans le lieu d'écoute, le message vocal étant perturbé par des signaux stéréophoniques diffusés par des haut-parleurs formant les sources, le système est tel que les moyens de traitement extraient l'estimation du message vocal contenu dans le signal sonore d'ambiance en décorrélant l'estimation du message vocal vis-à-vis respectivement des signaux stéréophoniques.

Selon un mode particulier, des moyens de transformation permettent de transformer l'estimation du message vocal en au moins une commande vocale. Les commandes vocales peuvent être utilisées pour rétroagir sur la source sonore de laquelle proviennent les signaux corrélés. Ainsi une commande vocale peut requérir de modifier le volume sonore délivré par l'autoradio. Lorsque le système détecte une telle commande vocale, il l'applique subséquemment à l'autoradio.

Mais l'exploitation des commandes vocales n'est pas limitée à la commande de la source sonore sur laquelle sont prélevés les signaux corrélés. Les commandes vocales peuvent également servir à commander les autres sources sonores ou à intervenir sur des actuateurs disposés dans le lieu d'écoute, l'automobile ou le salon par exemple. Ainsi une première commande vocale peut requérir d'abaisser le volume sonore diffusé par l'autoradio, puis une seconde commande vocale peut requérir de relever les vitres de l'automobile. Les moyens délivrant les commandes vocales sont pour cela connectés aux actuateurs concernés par les commandes vocales prévues à cet effet.

Dans le cas d'un système de téléconférence comportant une station émettrice et une station réceptrice reliées entre elles par au moins une voie aller et au moins une voie retour, les stations comportant chacune au moins deux microphones et au moins deux haut-parleurs diffusant deux signaux stéréophoniques, le système est caractérisé en ce que les moyens de traitement éliminent des échos indésirables engendrés par les signaux stéréophoniques arrivant dans la station émettrice en provenance de la station réceptrice, la station émettrice ne transmettant en stéréophonie que les estimations du message vocal local vers les haut-parleurs de la station réceptrice.

Les signaux de paroles prononcés par le locuteur peuvent ainsi être parfaitement séparés des signaux corrélés diffusés par les haut-parleurs en provenance de l'autre station. La station émettrice peut ainsi transmettre uniquement les signaux du locuteur de la station émettrice vers la station réceptrice. Ceci permet d'éviter les phénomènes d'échos qui se manifesteraient si les signaux délivrés par les haut-parleurs étaient réémis en boucle vers la station qui les diffuse.

Dans le cas où le capteur est une antenne qui reçoit un signal radiodiffusé, le système permet de séparer le signal radiodiffusé en le nettoyant de tous les signaux corrélés dus à des sources qui rayonnent des signaux perturbateurs,

Ces différents aspects de l'invention et d'autres encore seront apparents et élucidés à partir des modes de réalisation décrits ci-après.

L'invention sera mieux comprise à l'aide des figures suivantes données à titre d'exemples non limitatifs qui représentent:

Figure 1 : un schéma d'un système audio pour extraire le message vocal d'un seul locuteur, le système comportant en plus des moyens de reconnaissance de commandes vocales.

Figure 2 : un schéma d'un exemple de moyens de traitement à filtrage adaptatif pour décorréler les signaux.

Figure 3 : un schéma d'un exemple de moyens de traitement à séparation de sources pour décorréler les signaux.

Figure 4 : un schéma d'un exemple de moyens de filtrage adaptatif.

Figure 5 : un schéma d'un système audio pour extraire les messages vocaux de deux locuteurs, le système comportant en plus des moyens de reconnaissance de commandes vocales.

Figure 6 : un schéma d'un système de téléconférence muni de moyens de traitement pour décorréler les signaux.

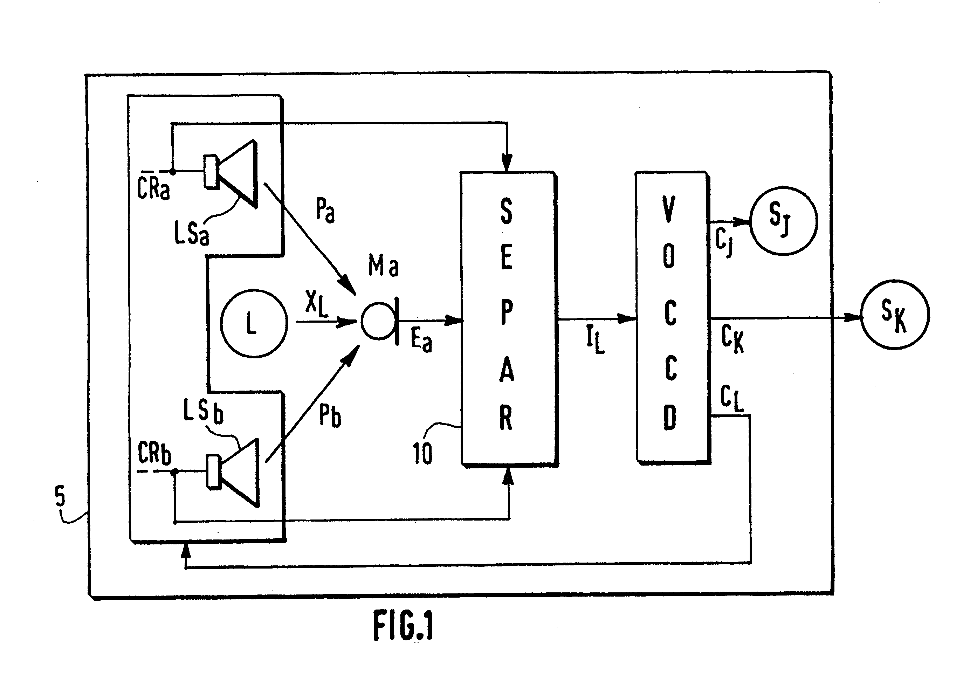

La figure 1 représente un système audio à reconnaissance vocale 5 selon l'invention pour la reconnaissance d'un seul locuteur L. A titre d'exemple, considérons le cas de sources sonores disposées dans une automobile, la possibilité étant donnée au locuteur, par exemple au conducteur du véhicule, d'exprimer des messages vocaux pour commander différentes actions à l'intérieur de l'habitacle. Les messages du conducteur sont captés par un microphone Ma qui capte également l'ensemble des signaux sonores qui existent dans l'habitacle. Ces signaux sonores peuvent comporter des bruits de toute nature, mais aussi notamment des sons stéréophoniques diffusés par un autoradio.

Les signaux sonores existant dans le lieu d'écoute sont captés et transformés par le microphone en un signal électrique Ea. Le signal Ea est un signal de mélange qui comporte le signal utile $X_L$ émis par le locuteur ainsi que des signaux perturbateurs Pa et Pb en provenance de haut-parleurs LSa, LSb. Les signaux sonores diffusés par les haut-parleurs sont des signaux stéréophoniques, c'est-à-dire des signaux corrélés, obtenus à partir de signaux électriques corrélés CRa et CRb qui excitent les haut-parleurs. Du fait de la corrélation entre les signaux, la séparation du signal utile $X_L$ vis-à-vis des signaux perturbateurs CRa et CRb n'était pas réalisable selon les techniques connues. Grâce à l'invention, il est possible de séparer correctement le signal utile $X_L$ sous la forme d'une estimation $I_L$ du signal utile $X_L$.

L'estimation $I_L$ est obtenue à l'aide de moyens de traitement SEPAR 10 qui utilisent une méthode adaptative réalisant une décorrélation de l'estimation $I_L$ vis-à-vis des signaux électriques corrélés CRa et CRb.

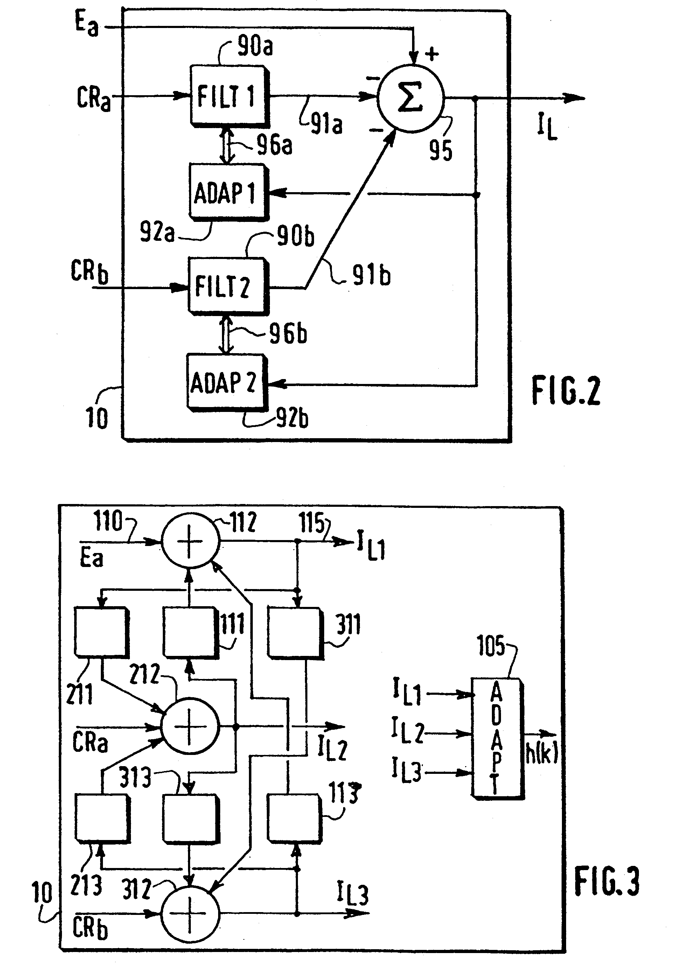

La figure 2 est un schéma de mise en oeuvre des moyens de traitement SEPAR 10. Les signaux perturbateurs CRa, CRb entrent respectivement dans des moyens de filtrage adaptatif FILT1 90a et FILT2 90b. Un moyen de sommation $\Sigma$ 95, par exemple un sommateur, reçoit le signal de mélange Ea duquel il soustrait les sorties des moyens de filtrage FILT1 et FILT2. La sortie du sommateur délivre l'estimation $I_L$. Les moyens de traitement 10 sont adaptatifs c'est-à-dire qu'ils s'adaptent aux variations des caractéristiques des signaux d'entrée. Des moyens d'adaptation ADAP1 et ADAP2 déterminent les mises à jour à appliquer aux filtres FILT1 et FILT2 pour qu'ils permettent au sommateur de délivrer une estimation fidèle du signal utile $X_L$, cette estimation continuant à rester fidèle lorsque les caractéristiques des signaux d'entrée évoluent.

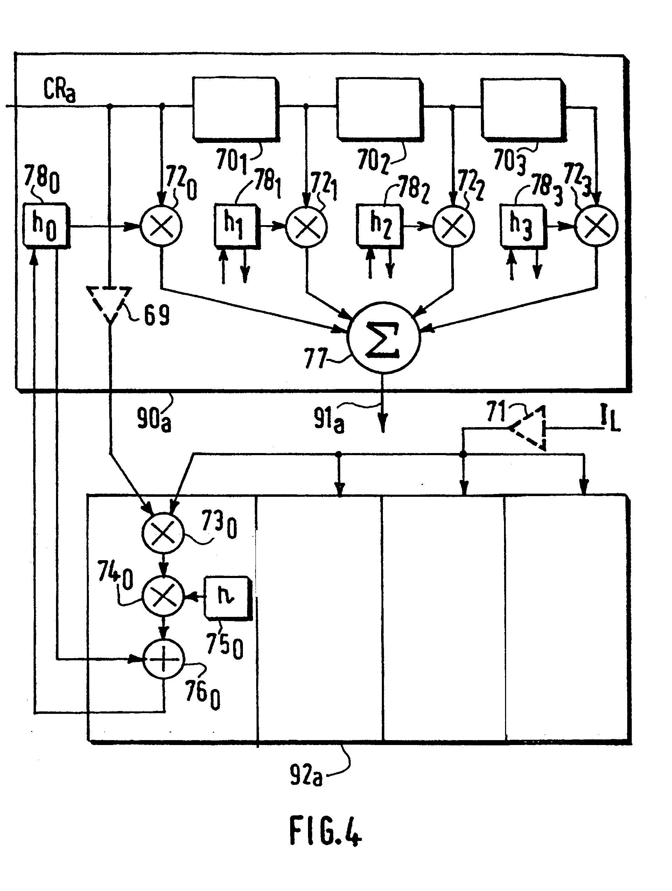

Chaque filtre adaptatif dispose d'une structure connue en soi (figure 4) comportant, par exemple, une batterie de cellules de retard, les cellules délivrant chacune le signal CRa retardé de k échantillons, chaque signal retardé étant pondéré par respectivement un coefficient de pondération $h_a(k)$. La sommation de tous les signaux retardés pondérés fournit le signal de sortie du filtre (connexions 91a, 91b).

D'une manière générale, la décorrélation des signaux $I_L$ vis-à-vis des signaux CRa ou CRb décalés d'un nombre entier d'échantillons k peut s'exprimer (pour CRa par exemple) selon:

$$(1) \qquad E[I_L(t) . CRa(t-k)] = 0,$$

dans laquelle la variable t correspond au temps et constitue l'indice entier de l'échantillon courant. Le terme E représente l'espérance mathématique de l'expression entre crochets par rapport au temps. Ainsi en annulant l'ensemble des contributions déterminées par l'équation (1) appliquée aux échantillons de signal pour $0 \leq k \leq M$, on effectue la décorrélation prévue dans le cas du filtre FILT1, M étant le nombre de cellules du filtre.

D'une manière particulière, les coefficients de pondération $h_a(k)$ peuvent être adaptés selon l'équation:

$$(2) \qquad h_a(k)(t+1) = h_a(k)(t) + \eta . I_L(t) . CRa(t-k),$$

dans laquelle la variable t est le temps.

Pour effectuer la décorrélation selon les équations (1) ou (2), les moyens d'adaptation ADAP1 reçoivent le signal perturbateur CRa et ses versions retardées et le signal $I_L$ de sortie du sommateur 95 et tous les coefficients $h_a(k)$ (bus 96a). Des opérations similaires sont effectuées par les moyens d'adaptation ADAP2 agissant sur le signal perturbateur CRb pour obtenir la décorrélation totale de l'estimation $I_L(t)$ vis-à-vis des deux signaux perturbateurs. A l'issue de chaque mise à jour, des nouveaux coefficients de pondération sont chargés dans les moyens de filtrage 90a, 90b (bus 96a, 96b).

La figure 4 représente un schéma du traitement correspondant par exemple au signal CRa à l'aide d'un exemple limité à quatre coefficients de pondération. Le signal CRa passe à travers trois cellules de retard $70_1$, $70_2$, $70_3$. Le signal en entrée de la première cellule et les signaux en sortie des trois cellules sont multipliés respectivement par des coefficients de pondération $h_a(0)$, $h_a(1)$, $h_a(2)$, $h_a(3)$ dans des moyens de multiplication $72_0$, $72_1$, $72_2$, $72_3$. Des moyens de stockage $78_0$ à $78_3$ stockent les coefficients de pondération. Les résultats obtenus sont additionnés dans un sommateur 77. Les moyens d'adaptation 92a opèrent une adaptation des coefficients de pondération selon l'équation (2). Considérons l'adaptation du coefficient $h_a(0)$ effectuée au temps t. Une cellule de multiplication $73_0$ effectue la multiplication du signal CRa par l'estimation $I_L$. Le résultat obtenu est multiplié par un gain d'adaptation $\eta$ dans une cellule de multiplication $74_0$. Le gain d'adaptation est stocké dans un moyen $75_0$. Le résultat obtenu est additionné avec la valeur ancienne de $h_a(0)$ de manière à obtenir le nouveau coefficient de pondération $h_a(0)$ au temps t+1. Un processus analogue est opéré pour les autres coefficients de pondération. L'adaptation des coefficients de pondération des moyens de filtrage FILT2 est effectuée de manière analogue.

Selon un mode particulier de réalisation, il est possible d'effectuer l'adaptation non pas directement sur les signaux perturbateurs CRa, CRb et sur l'estimation $I_L$, mais sur des version modifiées de ces signaux. L'adaptation peut ainsi être effectuée selon:

$$(3) \qquad E[f\{I_L(t)\} . g\{CRa(t-k)\}] = 0,$$

ou plus particulièrement selon:

$$(4) \qquad h_a(k)(t+1) = h_a(k)(t) + \eta . f[I_L(t)] . g[CRa(t-k)],$$

dans lesquelles l'une au moins des fonctions f(.) ou g(.) est une fonction non linéaire. Des équations similaires s'appliquent au filtre FILT2.

Pour appliquer ces fonctions, on modifie le schéma de la figure 4 en incorporant un moyen 69 pour appliquer la fonction non linéaire g(.) au signal perturbateur CRa et à chacune de ses versions retardées et en incorporant un moyen 71 pour appliquer la fonction non linéaire f(.) à l'estimation $I_L$ avant leur introduction dans les moyens de multiplication $73_0$. Les moyens 69 et 71 sont indiqués en pointillés sur cette figure car ils peuvent être omis. L'intérêt de ces fonctions non linéaires réside dans le fait que cela permet d'obtenir une meilleure vitesse et une meilleure précision d'adaptation des filtres FILT1 et FILT2 en choisissant des fonctions f(.) et g(.) adaptées aux signaux à traiter soit globalement pour l'ensemble des coefficients soit spécifiquement pour chaque coefficient.

Les moyens de traitement 10 ont été décrits à partir de moyens de filtrage adaptatif qui réalisent la décorrélation décrite. Il est également possible d'effectuer cette décorrélation en utilisant des moyens adaptatifs de séparation de sources. Dans ce cas les signaux perturbateurs ne sont pas pris en tant que signaux non mélangés mais traités comme n'importe quel signal.

La figure 3 décrit une structure récursive destinée à délivrer trois signaux estimés: $I_{L1} = <X_L>$, $I_{L2}$, $I_{L3}$. Les moyens de traitement sont alors des moyens de séparation de sources qui comportent une pluralité d'unités de filtrage adaptatif 111, 211, 311, 113, 213, 313. Cette structure comprend un premier sommateur 112 ayant une entrée 110 reliée au signal de mélange Ea et une sortie 115 qui délivre le signal estimé $I_{L1}$. Un second sommateur 212 a une entrée reliée au signal CRa et une sortie qui délivre le signal estimé $I_{L2}$. Un troisième sommateur 312 a une entrée reliée au signal CRb et une sortie qui délivre le signal estimé $I_{L3}$. Une seconde entrée du premier sommateur 112 est reliée à la sortie du second sommateur 212 à travers l'unité de filtrage adaptatif 111 qui filtre le signal de sortie du second sommateur. Une troisième entrée du premier sommateur 112 est reliée à la sortie du troisième sommateur 312 à travers l'unité de filtrage adaptatif 113 qui filtre le signal de sortie du troisième sommateur.

De la même manière, une seconde et une troisième entrée du second sommateur 212 sont reliées respectivement à la sortie du premier 112 et du troisième sommateur 312 à travers respectivement les unités de filtrage 211 et 213 qui filtrent le signal de sortie du premier et du troisième sommateur respectivement.

De la même manière, le troisième sommateur 312 est réuni aux sorties des autres sommateurs 112 et 212 à travers les unités de filtrage 311 et 313 qui filtrent le signal de sortie du premier et du second sommateur respectivement.

L'adaptation des coefficients de filtrage des unités de filtrage est effectuée dans des moyens d'adaptation ADAPT 105 dans lesquels entrent les signaux estimés $I_{L1}$, $I_{L2}$, $I_{L3}$. Pour cela, les moyens d'adaptation 105 effectuent la décorrélation des signaux $I_{L1}$, $I_{L2}$, $I_{L3}$ selon les équations (1) à (4) de la manière précédemment décrite. Pour cela, on remplace les signaux CRa, CRb par l'un des signaux $I_{L1}$, $I_{L2}$, $I_{L3}$ c'est-à-dire par le signal qui est connecté à l'entrée du filtre concerné. De même, $I_L$ est remplacé par un des signaux $I_{L1}$, $I_{L2}$, $I_{L3}$ c'est-à-dire par la sortie du sommateur qui reçoit en entrée la sortie du filtre concerné.

L'homme du métier peut concevoir des moyens de séparation de sources ayant une structure directe ou une structure mixte récursive/directe.

Les sommateurs, les cellules de multiplication et les unités de filtrage peuvent faire partie d'un calculateur, d'un microprocesseur ou d'une unité de traitement numérique du signal correctement programmée pour réaliser les fonctions décrites.

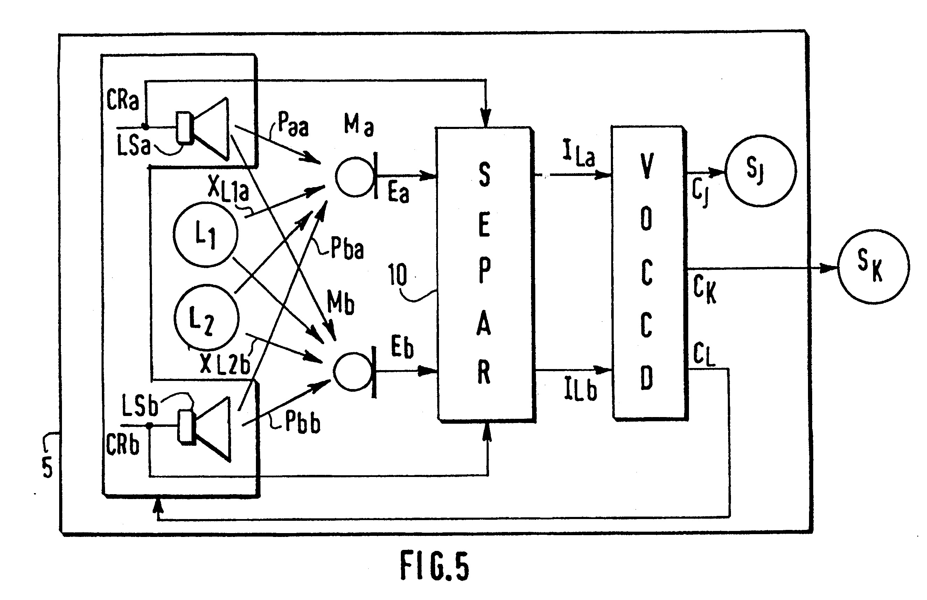

La figure 5 concerne le cas où deux locuteurs L1 et L2 peuvent émettre simultanément des messages vocaux dans le même lieu. Pour séparer deux locuteurs, où plus généralement deux sources de signaux, il est nécessaire d'utiliser deux capteurs qui reçoivent chacun des signaux de mélange différents Ea et Eb liés à la disposition des locuteurs par rapport aux microphones. Les signaux de mélange sont formés des mêmes signaux, seuls les mélanges étant différents. Les mêmes principes de fonctionnement que ceux développés dans le cas de la figure 1 sont mis en oeuvre. Dans le cas où les signaux perturbateurs sont traités comme des signaux perturbateurs non mélangés, les moyens de traitement SEPAR 10 comportent alors deux voies, chacune comportant les moyens décrits sur la figure 2. En sortie, il faut placer néanmoins des moyens de séparation de sources à deux entrées pour séparer les deux locuteurs selon le schéma de la figure 3 réduit à deux entrées. Dans le cas où les signaux perturbateurs sont traités comme des signaux perturbateurs mélangés, les moyens de traitement SEPAR 10 sont alors formés d'après le schéma de la figure 3 à laquelle est ajoutée une voie supplémentaire pour traiter le signal de mélange Eb en adaptant le schéma pour traiter sur le même principe les quatre signaux d'entrée.

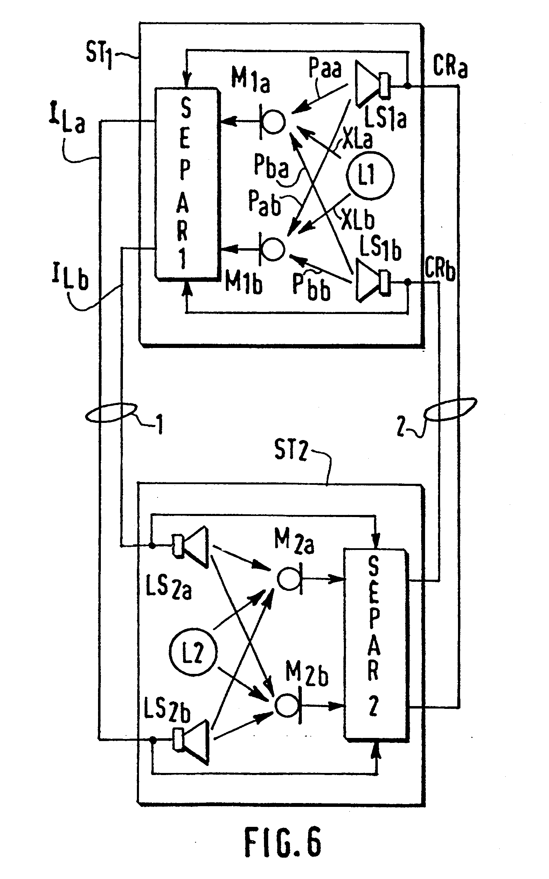

La figure 6 concerne le cas d'un système adapté pour traiter des signaux échangés en téléconférence sur des voies aller et retour 1, 2. Une station émettrice ST1 transmet des signaux stéréophoniques $I_{La}$ et $I_{Lb}$ sur deux haut-parleurs $LS_{2a}$ et $LS_{2b}$ d'une station réceptrice ST2. Les signaux d'estimation d'une station deviennent les signaux électriques corrélés générateurs de perturbations pour l'autre station. Evidemment, chaque station est alternativement émettrice et réceptrice. Dans la station réceptrice, un locuteur L2 prononce un message. Pour transmettre un message stéréophonique vers l'autre station, il est nécessaire de disposer de deux microphones. Les microphones $M_{2a}$ et $M_{2b}$ captent le message du locuteur ainsi que les sons diffusés par les deux haut-parleurs. Si aucun traitement n'était effectué, les sons provenant des haut-parleurs circuleraient continuellement d'une station à l'autre provoquant des phénomènes d'échos très désagréables pour la compréhension des locuteurs.

Pour traiter le problème des signaux stéréophoniques qui n'avait pas de solution à ce jour, on dispose dans chaque station des moyens de traitement SEPAR1 et SEPAR2 qui effectuent une décorrélation des signaux d'estimation vis-à-vis des signaux stéréophoniques arrivant sur les haut-parleurs. Un microphone, par exemple $M_{1a}$, va pouvoir recevoir le message $X_{La}$ venant du locuteur, ainsi que les signaux perturbateurs $P_{aa}$ et $P_{ba}$ provenant respectivement des haut-parleurs $LS_{1a}$ et $LS_{1b}$. Le microphone va ainsi délivrer un signal de mélange aux moyens de traitement SEPAR1. Les deux signaux électriques corrélés qui arrivent sur les haut-parleurs sont prélevés avant les haut-parleurs et sont introduits dans les moyens de séparation SEPAR1. Pour chaque microphone, une estimation du message du locuteur est effectuée par les moyens de traitement de la même manière que celle décrite précédemment concernant un signal de mélange d'entrée et deux signaux perturbateurs. Pour deux microphones, les moyens de la figure 2 ou 3 sont dupliqués. Chaque station peut ainsi isoler deux estimations qui sont transmises sans échos à l'autre station par les voies de transmission 1 et 2.

Ce qui a été développé précédemment concerne la délivrance d'une estimation correcte du message du locuteur. Ce message peut lui-même contenir des informations multiples qu'il faut décoder. Cette situation est représentée sur les figures 1 et 5 dans le cas par exemple d'un système disposé dans une automobile. Pour cela l'estimation IL est décodée dans des moyens de transformation VOCCD qui décodent des commandes que renferme le message du locuteur. Un message peut renfermer plusieurs commandes $C_L$, $C_J$, $C_K$ destinées à agir sur différents appareillages du système ou sur des organes du véhicule. En particulier, la commande $C_L$ peut réclamer de rétroagir sur l'appareillage qui délivre les signaux stéréophoniques. Ce peut être par exemple une demande du locuteur d'abaisser le volume sonore de l'autoradio délivrant les signaux stéréophoniques.

Une autre commande $C_J$ peut réclamer d'agir sur une autre source sonore $S_J$ faisant partie du système et qui elle aussi donne lieu à un traitement analogue.

Une autre commande $C_K$ peut ne pas concerner une source de signaux sonores, mais peut concerner le véhicule lui-même, par exemple actionner un actuateur $S_K$ pour mettre en route les essuie-glaces.

**Revendications**

1. Système de transmission de signaux muni de moyens de traitement (SEPAR) pour isoler une estimation ($I_L$) pour au moins un signal utile ($X_L$) contenu dans au moins un signal de mélange ( Ea), au moins un capteur (Ma) pour détecter le signal de mélange, le signal de mélange comportant au moins le signal utile ($X_L$) et au moins deux signaux perturbateurs corrélés (Pa, Pb) lesquels sont délivrés par deux sources (LSa, LSb) du système à partir respectivement de deux signaux électriques corrélés (CRa,CRb), les moyens de traitement (SEPAR) étant destinés à recevoir, en entrée, le signal de mélange détecté (Ea) ainsi que les deux signaux électriques corrélés (CRa, CRb) à partir desquels les moyens de traitement extraient l'estimation ($I_L$) du signal utile ($X_L$) contenu dans le signal de mélange détecté en décorrélant, sur des décalages multiples, l'estimation ($I_L$) vis-à-vis respectivement des signaux électriques corrélés (CRa,CRb) **caractérisé en ce que** les moyens de traitement comprennent :

   - une paire de moyens de filtrage adaptatif (90a-90b) destinée à filtrer les signaux électriques corrélés (Cra,Crb) de manière à délivrer des signaux filtrés (91a-91b),
   - des moyens d'adaptation (92a-92b) destinés à mettre à jour des coefficients des moyens de filtrage adaptatif en effectuant la décorrélation, sur des décalages multiples, de l'estimation ($I_L$) du signal utile vis-à-vis de chaque signal électrique corrélé,
   - un moyen de sommation (95) destiné à soustraire les signaux filtrés du signal de mélange de manière à délivrer l'estimation du signal utile.

2. Système de transmission de signaux muni de moyens de traitement (SEPAR) pour isoler une estimation ($I_L$) pour au moins un signal utile ($X_L$) contenu dans au moins un signal de mélange (Ea), au moins un capteur (Ma) pour détecter le signal de mélange, le signal de mélange comportant au moins le signal utile ($X_L$) et au moins deux signaux perturbateurs corrélés (Pa,Pb) lesquels sont délivrés par deux sources (LSa,LSb) du système à partir respectivement de deux signaux électriques corrélés (CRa,CRb), les moyens de traitement (SEPAR) étant destinés à recevoir, en entrée, le signal de mélange détecté (Ea) ainsi que les deux signaux électriques corrélés (CRa,CRb) à partir desquels les moyens de traitement extraient l'estimation ($I_L$) du signal utile ($X_L$) contenu dans le signal de mélange détecté en décorrélant, sur des décalages multiples, l'estimation ($I_L$) vis-à-vis respectivement des signaux électriques corrélés (CRa,CRb) **caractérisé en ce que** les moyens de traitement comprennent :

   - une paire de moyens de filtrage adaptatif (111,113) destinée à filtrer des estimations ($I_{L2}$, $I_{L3}$) des signaux perturbateurs corrélés (Pa,Pb) de manière à délivrer une première paire de signaux filtrés,
   - deux paires de moyens de filtrage adaptatif supplémentaires (211,213;311,313), une paire de moyens de filtrage adaptatif étant respectivement destinée à filtrer des estimations ($I_{L_1}$, $I_{L_2}$; $I_{L_1}$,$I_{L_3}$) du signal utile et d'un des signaux perturbateurs corrélés de manière à délivrer une deuxième paire ou une troisième paire de signaux filtrés,

- des moyens d'adaptation destinés à mettre à jour des coefficients des moyens de filtrage adaptatif en décorrélant, sur des décalages multiples, une des estimations vis-à-vis des autres estimations,

- des moyens de sommation (112,212,312) respectivement destinés à délivrer une des estimation ($I_{L_1}$,$I_{L_2}$,$I_{L_3}$) à partir du signal de mélange ou d'un des signaux électriques corrélés et de la paire correspondante de signaux filtrés.

3. Système selon les revendications 1 ou 2, **caractérisé en ce que** la ou les estimations($I_L$)($I_{L_1}$,$I_{L_2}$,$I_{L_3}$) et/ou les signaux électriques corrélés (CRa,CRb) sont soumis à l'action préalable de fonctions non linéaires.

4. Système selon l'une des revendications 1 à 3, le capteur étant un microphone, le signal de mélange étant un signal sonore d'ambiance capté dans un lieu d'écoute par le microphone, le signal utile étant un message vocal émis par un locuteur (L) dans le lieu d'écoute, le message vocal étant perturbé par des signaux stéréophoniques diffusés par des haut-parleurs formant les sources **caractérisé en ce que** les moyens de traitement sont destinés à extraire l'estimation du message vocal contenu dans le signal sonore d'ambiance en décorrélant, sur des décalages multiples, l'estimation du message vocal vis-à-vis respectivement des signaux stéréophoniques.

5. Système selon la revendication 4, **caractérisé en ce que** les moyens de traitement sont suivis de moyens (VOCCD) pour transformer l'estimation du message vocal en une commande vocale ($C_L$).

6. Système selon la revendication 5, **caractérisé en ce que** la commande vocale ($C_L$) rétroagit sur les sources (LSa,LSb) de signaux stéréophoniques.

7. Système selon la revendication 5, **caractérisé en ce que** la commande vocale ($C_L$) actionne un actuateur pour mettre en route un équipement.

8. Système selon la revendication 4, le système étant un système de téléconférence comportant une station émettrice (ST1) et une station réceptrice (ST2) reliées entre elles par au moins une voie aller (1) et au moins une voie retour (2), les stations comportant chacune au moins deux microphones (M) et au moins deux haut-parleurs (LS) diffusant deux signaux stéréophoniques (CRa,CRb) **caractérisé en ce que** les moyens de traitement (SEPAR) sont destinés à éliminer des échos indésirables engendrés par les signaux stéréophoniques arrivant dans la station émettrice (ST1) en provenance de la station réceptrice, la station émettrice ne transmettant en stéréophonie que les estimations ($I_{L_a}$,$I_{L_b}$) du message vocal local vers les haut-parleurs de la station réceptrice.

9. Système selon les revendications 1 ou 2, le capteur étant une antenne, le signal de mélange capté par l'antenne comportant le signal utile formé d'un signal radiodiffusé et des signaux perturbateurs corrélés en provenance de sources perturbatrices **caractérisé en ce que** les moyens de traitement sont destinés à extraire l'estimation du signal radiodiffusé contenu dans le signal de mélange en décorrélant, sur des décalages multiples, l'estimation du signal radiodiffusé vis-à-vis des signaux électriques corrélés.

**Claims**

1. A signal transmission system comprising processing means (SEPAR) for isolating an estimate ($I_L$) for at least one wanted signal ($X_L$) contained in at least one mixed signal (Ea), at least one sensor (Ma) for detecting the mixed signal, the mixed signal comprising at least the wanted signal ($X_L$) and at least two correlated interference signals (Pa, Pb) which are produced by two sources (LSa, LSb) of the system in response to two respective correlated electric signals (CRa, CRb), the processing means (SEPAR) being intended to receive at the input the detected mixed signal (Ea) as well as the two electric correlated signals (CRa, CRb) from which the processing means extract the estimate ($I_L$) of the wanted signal ($X_L$) contained in the detected mixed signal by decorrelating via multiple shifts the estimate ($I_L$) relative to the electric correlated signals (CRa, CRb), **characterized in that** the processing means comprise:

- a pair of adaptive filter means (90a-90b) intended to filter the correlated electric signals (Cra, Crb) so as to produce filtered signals (91a-91b),
- adapting means (92a-92b) intended to update coefficients of the adaptive filter means by carrying out the decorrelation via various shifts of the estimate ($I_L$) of the wanted signal relative to each correlated electric signal,
- a summing means (95) intended to subtract the filtered signals from the mixed signal so as to deliver the estimate of the wanted signal.

**2.** A signal transmission system comprising processing means (SEPAR) for isolating an estimate ($I_L$) for at least one wanted signal ($X_L$) contained in at least one mixed signal (Ea), at least one sensor (Ma) for detecting the mixed signal, the mixed signal comprising at least one wanted signal ($X_L$) and at least two correlated interference signals (Pa, Pb) which are produced by two sources (LSa, LSb) of the system from two correlated electric signals (CRa, CRb) respectively, the processing means (SEPAR) being intended to receive on the input the detected mixed signal (Ea) as well as the two correlated electric signals (CRa, CRb) from which the processing means extract the estimate ($I_L$) of the wanted signal ($X_L$) contained in the detected mixed signal by decorrelating via various shifts the estimate ($I_L$) with respect to correlated electric signals (CRa, CRb) respectively, **characterized in that** the processing means comprise:

- a pair of adaptive filter means (111,113) intended to filter estimates ($I_{L2}, I_{L3}$) of the correlated interference signals (Pa, Pb) so as to produce a first pair of filtered signals,
- two pairs of additional adaptive filter means (211, 213; 311, 313), one pair of adaptive filter means being intended to filter estimates ($I_{L1}, I_{L2}; I_{L1}, I_{L3}$) of the wanted signal and one of the correlated interference signals so as to produce a second pair or a third pair of filtered signals,
- adapting means intended to update coefficients of the adaptive filter means by carrying out the decorrelation via various shifts of one of the estimates with respect to the other estimates,
- summing means (112, 212, 312) intended to produce one of the estimates ($I_{L1}, I_{L2}, I_{L3}$) from the mixed signal or from one of the correlated electric signals and from the corresponding pair of filtered signals.

**3.** A system as claimed in claim 1 or 2, **characterized in that** the estimates ($I_L$) ($I_{L1}, I_{L2}, I_{L3}$) and/or the correlated electric signals (CRa, CRb) are subjected to the action that precedes non-linear functions.

**4.** A system as claimed in one of the claims 1 to 3 in which the sensor is a microphone, the mixed signal is an ambient sound signal captured at the listening end by the microphone, the wanted signal is a voice message sent by a speaker (L) at the listening end, the voice message is interfered by stereophonic signals broadcast by loudspeakers which form the sources, **characterized in that** the processing means extract the estimate of the voice message contained in the ambient sound signal by decorrelating the estimate of the voice message relative respectively to the stereophonic signals via various shafts.

**5.** A system as claimed in claim 4, **characterized in that** the processing means are followed by means (VOCCD) for converting the estimate of the voice message into a voice command ($C_L$).

**6.** A system as claimed in claim 5, **characterized in that** the voice command ($C_L$) acts in return on the stereophonic signal sources (LSa, LSb).

**7.** A system as claimed in claim 5, **characterized in that** the voice command ($C_L$) activates an actuator for starting a piece of equipment.

**8.** A system as claimed in claim 4, the system being a teleconference system comprising a transmitting station (ST1) and a receiving station (ST2) interconnected by at least an up (1) and at least a down channel (2), the stations comprising each at least two microphones (M) and at least two loudspeakers (LS) broadcasting two stereophonic signals (CRa, CRb), **characterized in that** the processing means (SEPAR) are intended to eliminate undesirable echoes generated by the stereophonic signals arriving at the transmitting station (ST1) coming from the receiving station, the transmitting station transmitting in stereo only the estimates ($I_{La}, I_{Lb}$) of the local voice message to the loudspeakers of the receiving station.

**9.** A system as claimed in claim 1 or 2 in which the sensor is an antenna, the mixed signal captured by the antenna comprises the wanted signal formed by a radio broadcast signal and correlated interference signals coming from interference sources, **characterized in that** the processing means are intended to extract the estimate of the radio broadcast signal contained in the mixed signal by decorrelating via various shifts the estimate of the radio broadcast signal relative to correlated electric signals.

**Patentansprüche**

**1.** System zur Übertragung von Signalen versehen mit Verarbeitungsmitteln (SEPAR) zur Isolierung einer Bewertung ($I_L$) für mindestens ein Nutzsignal ($X_L$) enthalten in mindestens einem Mischsignal (Ea), mindestens einem Sensor (Ma) zur Erkennung des Mischsignals, wobei das Mischsignal mindestens das Nutzsignal ($X_L$) und mindestens zwei korrelierte Störsignale (Pa, Pb) enthält, welche von zwei Quellen (LSa, LSb) des Systems respektive ausgehend von zwei korrelierten elektrischen Signalen (CRa, CRb) ausgegeben werden, die Verarbeitungsmittel (SEPAR) dazu bestimmt sind, am Eingang das erkannte Mischsignal (Ea) sowie die zwei korrelierten elektrischen Signale (CRa, CRb) zu erhalten, ausgehend von denen die Verarbeitungsmittel die Bewertung ($I_L$) des Nutzsignals ($X_L$) entnehmen, welches in dem Mischsignal enthalten ist, das beim Dekorrelieren mit multiplen Versetzungen der Bewertung ($I_L$) hinsichtlich respektive korrelierter elektrischer Signale (CRa, CRb) erkannt wurde, **dadurch gekennzeichnet, dass** die Verarbeitungsmittel enthalten:

- ein Paar adaptive Filtermittel (90a-90b), bestimmt zum Filtern korrelierter elektrischer Signale (Cra, Crb), um die gefilterten Signale (91a-91b) auszugeben,
- Adaptionsmittel (92a-92b), bestimmt zur Aktualisierung der Koeffizienten der adaptiven Filtermittel beim Ausführen des Dekorrelierens mit multiplen Versetzungen der Bewertung ($I_L$) des Nutzsignals hinsichtlich jedem korrelierten elektrischen Signal,
- einen Summenbilder (95), bestimmt zur Subtraktion der gefilterten Signale des Mischsignals, um die Bewertung des Nutzsignals auszugeben.

2. System zur Übertragung von Signalen, versehen mit Verarbeitungsmitteln (SEPAR) zur Isolierung einer Bewertung ($I_L$) für mindestens ein Nutzsignal ($X_L$), enthalten in mindestens einem Mischsignal (Ea), mit mindestens einem Sensor (Ma) zur Erkennung des Mischsignals, wobei das Mischsignal mindestens das Nutzsignal ($X_L$) und mindestens zwei korrelierte Störsignale (Pa, Pb) enthält, welche von zwei Quellen (LSa, LSb) des Systems respektive ausgehend von zwei korrelierten elektrischen Signalen (CRa, CRb) ausgegeben werden, die Verarbeitungsmittel (SEPAR) dazu bestimmt sind, am Eingang das erkannte Mishsignal (Fa) sowie die zwei korrelierten elektrischen Signale (CRa, CRb) zu erhalten, ausgehend von denen die Verarbeitungsmittel die Bewertung ($I_L$) des Nutzsignals ($X_L$) entnehmen, welches in dem Mischsignal enthalten ist, das beim Dekorrelieren mit multiplen Versetzungen der Bewertung ($I_L$) hinsichtlich respektive korrelierter elektrischer Signale (CRa, CRb) erkannt wurde, **dadurch gekennzeichnet, dass** die Verarbeitungsmittel enthalten:

- ein Paar adaptive Filtermittel (111; 113), bestimmt zum Filtern der Bewertungen ($I_{L2}$; $I_{L3}$) der korrelierten Störsignale (Pa, Pb), um ein erstes Paar gefilterter Signale auszugeben,
- zwei Paar zusätzliche adaptive Filtermittel (211; 213; 311; 313), wobei ein Paar der adaptiven Filtermittel respektive dazu bestimmt ist, die jeweiligen Bewertungen ($I_{L1}$; $I_{L2}$; $I_{L1}$; $I_{L3}$) des Nutzsignals und eines der korrelierten Störsignale zu filtern, um ein zweites Paar oder ein drittes Paar gefilterter Signale auszugeben,
- dazu bestimmte Adaptionsmittel, die Koeffizienten der adaptiven Filtermittel mit dem Dekorrelieren über multiple Versetzungen einer der Bewertungen hinsichtlich der anderen Bewertungen zu aktualisieren,
- Additionsmittel (112, 212, 312), die jeweils dafür bestimmt sind, ausgehend vom Mischsignal oder eines korrelierten elektrischen Signals und dem entsprechenden Paar gefilterter Signale eine der Bewertungen ($I_{L1}$; $I_{L2}$; $I_{L3}$) auszugeben.

3. System nach den Ansprüchen 1 oder 2, **dadurch gekennzeichnet, dass** die Bewertung(en) ($I_L$) ($I_{L1}$; $I_{L2}$; $I_{L3}$) und/oder die korrelierten elektrischen Signale (CRa, CRb) der vorhergehenden Aktion von nichtlinearen Funktionen ausgesetzt sind.

4. System nach einem der Ansprüche 1 bis 3, wobei der Sensor ein Mikrofon ist, das Mischsignal ein Lautsignal der Umgebung ist, das in einem Hörbereich vom Mikrofon aufgenommen wurde, das Nutzsignal eine Sprachmeldung ist, die von einem Sprecher (L) im Hörbereich gemacht wurde, die Sprachmeldung von den Stereosignalen gestört ist, die von den Quellen bildenden Lautsprechern ausgestrahlt werden, **dadurch gekennzeichnet, dass** die Verarbeitungsmittel dafür sind bestimmt sind, die Bewertung der Sprachmeldung zu entnehmen, die in dem Lautsignal der Umgebung enthalten ist, indem sie die Bewertung der Sprachmeldung hinsichtlich respektive der Stereosignale dekorrelieren.

5. System nach Anspruch 4, **dadurch gekennzeichnet, dass** die Verarbeitungsmittel von Mitteln (VOCCD) gefolgt werden, um die Bewertung der Sprachmeldung in eine Sprachsteuerung ($C_L$) zu wandeln.

6. System nach Anspruch 5, **dadurch gekennzeichnet, dass** die Sprachsteuerung ($C_L$) auf die Quellen (LSa, LSb) der Stereosignale rückwirkt.

7. System nach Anspruch 5, **dadurch gekennzeichnet, dass** die Sprachsteuerung ($C_L$) einen Aktuator betätigt, um eine Ausrüstung in Betrieb zu nehmen.

8. System nach Anspruch 4, wobei das System ein Telekonferenzsystem ist, das eine Sendestation (ST1) und eine Empfangsstation (ST2) enthält, die mindestens über einen Hinweg (1) mindestens einen Rückweg (2) miteinander verbunden sind, die Stationen jeweils mindestens zwei Mikrofone (M) und mindestens zwei Lautsprecher (LS) zum Ausstrahlen zweier Stereosignalen (CRa, CRb) enthalten, **dadurch gekennzeichnet, dass** die Verarbeitungsmittel (SEPAR) dazu bestimmt sind, die unerwünschten Echos zu entfernen, die von den in der Sendestation (ST1) von der Empfangsstation ankommenden Stereosignalen erzeugt werden, und die Sendestation nur die Bewertungen ($I_{La}$, $I_{Lb}$) der lokalen Sprachmeldung in Stereo an die Lautsprecher der Empfangsstation leitet.

9. System nach den Ansprüchen 1 oder 2, wobei der Sensor eine Antenne ist, das von der Antenne empfangene Mischsignal das Nutzsignal enthält, das aus einem Funksignal und dem korrelierten Störsignal aus Störquellen kommt, **dadurch gekennzeichnet, dass** die Verarbeitungsmittel dafür bestimmt sind, die im Mischsignal enthaltene Bewertung des Funksignals mit der Dekorrelierung mit multiplen Versetzungen der Bewertung des Funksignals hinsichtlich korrelierter elektrischer Signale zu entnehmen.

FIG.1

FIG.2

FIG.3

FIG.4

FIG.5

EP 0 786 920 B1

FIG.6